# EUROPÄISCHE PATENTANMELDUNG

(11) **EP 1 262 460 A2**
(43) Veröffentlichungstag der Anmeldung: **04.12.2002**
(21) Anmeldenummer: 02009432.2
(22) Anmeldetag: 25.04.2002
(51) Int. Cl.: C02F 7/00

(54) **Verfahren zum Einbringen einer mit Gas, insbesondere mit Sauerstoff beladenen Flüssigkeit in tiefere Bereiche einer Flüssigkeitsansammlung, insbesondere eines Sees, und Vorrichtung zum Durchführen des Verfahrens**

(30) Priorität: 25.04.2001 DE 10120111
(71) Anmelder: Fachhochschule Oldenburg /Ostfriesland /Wilhelmshaven vetreten durch den Präsidenten, 26723 Emden (DE)
(72) Erfinder: Michele, Jürgen, Prof. Dr.-Ing., 26419 Schortens (DE); Michele, Volker, Dipl.-Ing., 51375 Leverkusen (DE)
(74) Vertreter: Siekmann, Gunnar, Dipl.-Phys.

(57) **Zusammenfassung**

Bei einem Verfahren zum Einbringen von Gas, insbesondere von Sauerstoff, in tiefere Bereiche einer Flüssigkeitsansammlung, insbesondere eines Sees oder eines Güllelagers, bei dem gasreiche Flüssigkeit in die tieferen Bereiche der Flüssigkeitsansammlung geführt wird, ist vorgesehen, daß gasreiche Flüssigkeit zu einem Volumen zusammengeführt wird und daß dieses Volumen in Form eines Freistrahles (11) in die tieferen Bereiche der Flüssigkeitsansammlung bewegt wird.

Eine zur Durchführung dieses Verfahrens vorgesehene Vorrichtung zeichnet sich dadurch aus, daß sie wenigstens einen im Bereich der Oberfläche (1) der Flüssigkeitsansammlung unterhalb der Oberfläche endenden rohrförmigen Leitungsabschnitt (6) für ein Flüssigkeitsvolumen aufweist und daß dem rohrförmigen Leitungsabschnitt (6) zumindestens ein Flüssigkeitsbewegungsmittel (8) zugeordnet ist.

## Beschreibung

Die Erfindung betrifft ein Verfahren zum Einbringen eines Gases, insbesondere von Sauerstoff, in tiefere Bereiche einer Flüssigkeitsansammlung, insbesondere eines Sees oder eines Güllelagers, bei dem die gasreiche Flüssigkeit in die tieferen Bereiche der Flüssigkeitsansammlung geführt wird.

Die Erfindung betrifft weiterhin eine Vorrichtung zum Einbringen eines Gases, insbesondere von Sauerstoff, in tiefere Bereiche einer Flüssigkeitsansammlung insbesondere zur Durchführung des vorbezeichneten Verfahrens.

Durch Verschmutzungen aus Industrie, Landwirtschaft und Haushalten werden Flüssigkeitsansammlungen, insbesondere Seen, Teiche und andere Gewässer, verunreinigt. Diese Verunreinigungen haben neben anderen Folgen ein vermehrtes Algenwachstum zur Folge, was wiederum bewirkt, daß derartige Gewässer eutroph werden. In einer eutrophen Gewässeransammlung sind tiefere Bereiche der Flüssigkeitsansammlung sauerstoffarm bzw. sauerstofflos. Auf Sauerstoff angewiesenes Leben in diesen Bereichen stirbt ab.

Um derartige eutrophe Flüssigkeitsansammlungen wieder zu beleben, ist bereits vorgeschlagen worden, sauerstoffreiche Flüssigkeit z. B. aus einer oder mehreren oberen Schichten der Flüssigkeitsansammlung in die tieferen Schichten der Flüssigkeitsansammlung zwangsweise zu führen. Dieser Maßnahme liegt zugrunde, daß in oberen Flüssigkeitsschichten mehr Sauerstoff enthalten ist als in den unteren Flüssigkeitsschichten. Durch ein Zuführen der Flüssigkeit aus den oberen Schichten in diese unteren Schichten kann der in der Flüssigkeit enthaltene erhöhte Sauerstoffanteil in die tieferen Schichten transportiert werden. Dort soll sich die zugeführte sauerstoffreiche Flüssigkeit mit der bereits vorhandenen, sauerstoffarmen Flüssigkeit vermischen, um so insgesamt eine Erhöhung des Sauerstoffanteils in der Flüssigkeit zu erreichen.

Bei einem aus der WO 81/02731 bekannt gewordenen, gattungsgemäßen Verfahren wird in einer Höhe von etwa 5 m unterhalb der Oberfläche eines Sees angeordnetes Wasser mittels eines Rohres bis in den Bereich unmittelbar oberhalb des Seegrundes transportiert. Mit diesem Verfahren wird zwar erreicht, daß sauerstoffreicheres Wasser in tiefere Schichten eines Sees transportiert wird, jedoch ist ein hoher apparativer Aufwand und damit ein hoher Kostenaufwand erforderlich.

Der Erfindung liegt die Aufgabe zugrunde, ein Verfahren der eingangs genannten Gattung aufzuzeigen, das mit einem geringen Kostenaufwand ein Einbringen von Gas in tiefere Bereiche einer Flüssigkeitsansammlung mit einem hohen Wirkungsgrad ermöglicht. Darüber hinaus soll eine Vorrichtung aufgezeigt werden, mit der das erfindungsgemäße Verfahren durchführbar ist.

Diese Aufgabe ist verfahrensseitig erfindungsgemäß dadurch gelöst, daß gasreiche Flüssigkeit zu einem Volumen zusammengeführt wird und daß dieses Volumen in Form eines Freistrahls in die tieferen Bereiche der Flüssigkeitsansammlung bewegt wird.

Bei dem erfindungsgemäßen Verfahren wird gasreiche, vorzugsweise sauerstoffreiche Flüssigkeit zu einem Volumen zusammengeführt, das anschließend in tiefere Bereiche der Flüssigkeitsansammlung geleitet wird. Dieses Leiten erfolgt erfindungsgemäß in Form eines Freistrahls.

Bei einem Freistrahl wird das Flüssigkeitsvolumen in einem durch die Flüssigkeitsansammlung strömenden Strahl geführt, der nicht durch Führungswände begrenzt ist. Das im Freistrahl geführte Volumen wird durch das ihn umgebende Medium begrenzt. Da somit für diesen Freistrahl Führungswände nicht benötigt werden, kann auf die Anordnung von Leitungsrohren mit dem Vorteil verzichtet werden, daß Apparatekosten dafür nicht anfallen.

Das Volumen der Flüssigkeit strömt in dem Freistrahl bis in die tieferen Bereiche, z. B. Schichten, der Flüssigkeitsansammlung. Ein Freistrahl eines Wasservolumens in einem See kann sich beispielsweise 30 m bis 60 m durch das Seewasser fortbewegen.

Es hat sich gezeigt, daß das im Freistrahl durch die Flüssigkeitsansammlung bewegte Flüssigkeitsvolumen während der Bewegung Flüssigkeitsmassen aus der Umgebung in das bewegte Volumen einmischt. Dadurch ist vorteilhaft der Effekt gegeben, daß durch dieses Einmischen Flüssigkeitsvolumen aus mittleren Schichten der Flüssigkeitsansammlung auf der Bewegung des Volumens in die tieferen Schichten der Flüssigkeitsansammlung mitgerissen werden. Dadurch kommt es zu einer gewünschten verstärkten Durchmischung der Flüssigkeit in der Flüssigkeitsansammlung. Die eingemischten Massen transportieren vorteilhaft zusätzlich aus höheren Schichten Sauerstoff in die tieferen Schichten.

Das in Form des Freistrahls geführte Flüssigkeitsvolumen breitet sich in den tieferen Schichten der Flüssigkeitsansammlung aus, insbesondere bei einem Auftreffen des Volumens auf dem Grund der Flüssigkeitsansammlung. Dadurch tritt bereits eine Vermischung des Flüssigkeitsvolumens mit hohem Sauerstoffanteil mit der vorhandenen Flüssigkeit mit niedrigem Sauerstoffanteil ein.

Nach einer Weiterbildung des erfindungsgemäßen Verfahrens wird unmittelbar unterhalb der Oberfläche der Flüssigkeitsansammlung angeordnete Flüssigkeit zu dem Volumen zusammengeführt, das in die tieferen Schichten der Flüssigkeitsansammlung bewegt wird. Die unmittelbar unterhalb der Oberfläche angeordnete Flüssigkeit weist auch aufgrund natürlicher Durchmischung z. B. durch Wellenschlag und Oberflächenströmung eine hohe Sättigung mit Sauerstoff auf. Vorzugsweise wird die Flüssigkeit zum Einbringen in die tieferen Schichten der Flüssigkeitsansammlung verwendet, die 0 bis 50 cm unterhalb der Oberfläche der Flüssigkeitsansammlung angeordnet ist. Diese Flüssigkeit weist die höchste Sättigung an Sauerstoff auf. Ist die Flüssigkeitsansammlung ein See, so ist das unmittelbar an der Oberfläche bzw. unterhalb der Oberfläche angeordnete Wasser am höchsten mit Luftsauerstoff gesättigt.

Wird das erfindungsgemäße Verfahren bei einem natürlichen Gewässer, wie einem See, während der Sommermonate angewandt, zeichnet sich das unmittelbar unterhalb der Seeoberfläche angeordnete Wasser neben der erhöhten Sauerstoffkonzentration auch durch eine erhöhte Temperatur aus. Wird dieses oberflächennahe Wasser in Form des Freistrahls in tiefere Flüssigkeitsschichten des Sees transportiert, so wird das warme Oberflächenwasser in das kühlere Wasser in den tieferen Schichten des Sees geführt. Nach einem Verteilen dieses Oberflächenwassers über den Grund des Sees beginnt das Oberflächenwasser, aufgrund seiner erhöhten Temperatur wieder zur Oberfläche aufzusteigen. Dadurch werden die Flüssigkeiten vorteilhaft vermischt und es erfolgt eine Versorgung der Flüssigkeit in den unteren Schichten mit Sauerstoff und damit eine Destratifizierung dieser Schichten.

Das kältere und dichtere Wasser in tieferen Bereichen wird durch das sauerstoffbeladene und wärmere Wasser aus dem Bereich der Flüssigkeitsansammlungsoberfläche unterwandert.

Das erfindungsgemäße Verfahren kann auch zur Aerobhaltung von Gülle genutzt werden. Hier wird Gülle mit einem erhöhten Sauerstoffgehalt aus der Oberfläche der Gülleansammlung in tiefere Schichten in Form eines Freistrahls transportiert. Die Qualität der Gülle wird dadurch verbessert, insbesondere ist eine Geruchsminderung beim Ausbringen erreicht. Zudem ist eine bessere Pflanzenverträglichkeit der Gülle zu erwarten.

Mit dem erfindungsgemäßen Verfahren ist gewährleistbar, das Gase, insbesondere Sauerstoff oder Luft, mit hohem Wirkungsgrad in tiefere Bereiche einer Flüssigkeitsansammlung geführt werden, ohne daß hohe Kosten auftreten.

Bei dem erfindungsgemäßen Verfahren kann vorgesehen sein, daß die Bewegung des Volumens in Form des Freistrahls in die tieferen Bereiche der Flüssigkeitsansammlung über einen langen Zeitraum vorzugsweise fortlaufend durchgeführt wird. Durch einen längeren Zeitraum des Einleitens z. B. sauerstoffreicher Flüssigkeit in die tieferen Bereiche der Flüssigkeitsansammlung ist eine nachhaltige Erhöhung der Sauerstoffkonzentration in diesen tieferen Bereiche erreichbar. Das erfindungsgemäße Verfahren wird in einem See beispielsweise über Monate fortlaufend durchgeführt. Dabei erfolgt eine Durchmischung der gesamten im See enthaltenen Wassermenge.

Nach einer nächsten Weiterbildung der Erfindung ist vorgesehen, daß die Bewegung des Volumens in Form des Freistrahls mit einer Geschwindigkeit von etwa 1 m pro Sekunde bis 20 cm pro Sekunde durchgeführt wird. Das insbesondere aus der oberflächennahen Flüssigkeit gebildete Flüssigkeitsvolumen wird somit mit einer geringen Geschwindigkeit in dem Freistrahl in tiefere Bereiche oder Schichten befördert. Die gasreiche Flüssigkeit wird beispielsweise mit einer Geschwindigkeit von einem Meter pro Sekunde als Freistrahl in die Flüssigkeitsansammlung eingeleitet. Nach diesem Einleiten nimmt die Geschwindigkeit des in dem Freistrahl durch die Flüssigkeitsansammlung geführten Flüssigkeitsvolumen ab, wobei eine Endgeschwindigkeit beispielsweise bei etwa 20 cm pro Sekunde liegt. Durch diese geringe Geschwindigkeit ist verhindert, daß beispielsweise am Boden eines Sees angeordnete Sedimente aufgerührt werden.

Die geringe Geschwindigkeit der Förderung des Volumens nach dem Prinzip des Freistrahls hält die Reibungsverluste niedrig. Die Reibungsverluste eines Freistrahls wachsen überproportional mit der Geschwindigkeit, so daß es bei dem erfindungsgemäßen Verfahren sinnvoll ist, mit geringen Geschwindigkeiten zu arbeiten. Im Gegenzug zu dieser geringen Geschwindigkeit kann das Flüssigkeitsvolumen einen relativ großen Durchmesser aufweisen. Durch größere Durchmesser treten bei dem erfindungsgemäßen Verfahren keine erheblichen Mehrkosten auf.

Eine weitere Weiterbildung der Erfindung sieht vor, daß die Bewegung des Volumens in Form des Freistrahls mit einem spitzen Winkel zur Oberfläche der Flüssigkeitsansammlung durchgeführt wird. Diese schräge Einleitung der Oberflächenflüssigkeit in die tieferen Schichten der Flüssigkeitsansammlung kann eine Anpassung an flache Seen bewirken. Grundsätzlich wird durch die schräge Einleitung die Lauflänge des Freistrahls in einer sauerstoffreichen Umgebung verlängert, wodurch bei geringer Wassertiefe ein ausreichend bemessener Freistrahlweg ausgebildet ist. Der Freistrahl kann dabei unter Umständen die mehr als achtfache Ausgangsmasse in die Tiefe der Flüssigkeitsansammlung transportieren. Der spitze Winkel beträgt beispielsweise 20°.

In tiefere Schichten beförderte Flüssigkeit steigt aufgrund der erhöhten Temperatur wieder nach oben auf. Dabei wird Flüssigkeit aus tieferen Schichten mit nach oben gerissen, mit der Folge, daß es in oberflächennahe Bereiche bzw. an die Oberfläche gelangt. An der Oberfläche und in oberflächennahen Bereichen kann dann ein Gasaustausch mit dem Umgebungsgas der Flüssigkeitsansammlung erfolgen. Bei einem See wird auf diese Weise an die Oberfläche gefördertes Wasser beispielsweise mit Sauerstoff angereichert. Dieses Wasser wird dann nach dem erfindungsgemäßen Verfahren wieder zu einem Volumen zusammengeführt, das in Form des Freistrahls in die tieferen Schichten befördert wird. Dadurch wird in dem See ein Kreislauf ausgebildet.

Dieser Kreislauf kann nach einer Weiterbildung der Erfindung durch den insbesondere auf einen See einwirkenden Wind gefördert werden, indem das Volumen in Form des Freistrahls schräg abwärts entgegengesetzt einer Hauptwindrichtung in der räumlichen Umgebung der Flüssigkeitsansammlung bewegt wird. Das Einleiten des Volumens in die tieferen Schichten kann hier beispielsweise in Ufernähe schräg abwärts in Richtung der Mitte des Sees erfolgen, wobei wieder aufsteigendes Wasser durch den in der Hauptwindrichtung auf den See einwirkenden Wind wieder in die Nähe des Ufers transportiert wird.

Durch den Wind wird das oberflächennahe Wasser des Sees aufgewühlt, wodurch eine Anreicherung mit Sauerstoff erfolgt. Verfahrensgemäß kann noch vorgesehen sein, daß beim Zusammenführen des Oberflächenwassers zu einem Volumen das Oberflächenwasser einer Aufrührung unterzogen wird. Dies mit dem Ziel, den im Wasser enthaltenen Sauerstoffanteil zu erhöhen.

Eine Aufrührwirkung eines Seegrundes durch den Freistrahl ist bei dem erfindungsgemäßen Verfahren auf den Nahbereich beschränkt. Der zugeführte Sauerstoff bewirkt zudem in kurzer Zeit eine biologische Umsetzung der aufgerührten Bodenstoffe.

Durch den Sauerstoff werden alle sauerstoffzehrenden Vorgänge gefördert. Insbesondere werden die organischen Stoffe oxidiert und dabei mineralisiert. Durch den Sauerstoff wird die Artenvielfalt in einem See erhöht, der Algenwuchs geht zurück, die Fische sterben nicht und Schadstoffe werden oxidiert. Ganz allgemein werden Lebewesen und Pflanzen gefördert, die den Schadstoffabbau bewirken.

Eine Vorrichtung vorzugsweise zur Durchführung des erfindungsgemäßen Verfahrens, für die selbständiger Schutz beansprucht wird, zeichnet sich dadurch aus, daß sie wenigstens einen im Bereich der Oberfläche der Flüssigkeitsansammlung unterhalb der Oberfläche endenden rohrförmigen Leitungsabschnitt für ein Flüssigkeitsvolumen aufweist und daß dem rohrförmigen Leitungsabschnitt zumindestens ein Flüssigkeitsbewegungsmittel zugeordnet ist.

Mit dem erfindungsgemäßen rohrförmigen Leitungsabschnitt ist ein Flüssigkeitsvolumen in die Flüssigkeitsansammlung einbringbar. Das Flüssigkeitsvolumen strömt durch den rohrförmigen Abschnitt hindurch und tritt unterhalb der Oberfläche in die Flüssigkeitsansammlung ein, da das Ende des rohrförmigen Leitungsabschnittes unterhalb der Flüssigkeitsansammlungsoberfläche angeordnet ist. Das auf diese Weise zugeführte Flüssigkeitsvolumen tritt in seinem Weg durch die Flüssigkeitsansammlung frei durch die Flüssigkeitsansammlung durch. Dabei behält das Volumen etwa seine Querschnittsform bei, die es durch die Rohrform des Leitungsabschnittes erhalten hat. Der erfindungsgemäße Freistrahl wird dadurch ausgebildet. Eine Leitung des zugeführten Flüssigkeitsvolumens durch ein längeres Rohrleitungssystem unterhalb der Oberfläche der Flüssigkeitsansammlung ist nicht vorgesehen, so daß entsprechende Installationskosten vorteilhaft minimiert sind.

Der rohrförmige Leitungsabschnitt kann beispielsweise der Flüssigkeitsansammlung von außen zugeführt sein. Durch den Leitungsabschnitt kann eine fremde Flüssigkeit in die Flüssigkeitsansammlung oder Flüssigkeit aus der Flüssigkeitsansammlung zugeführt werden. Zum Zuführen ist das wenigstens eine Flüssigkeitsbewegungsmittel vorgesehen, daß innerhalb des rohrförmigen Leitungsabschnittes angeordnet sein kann oder diesem von außerhalb zugeordnet ist.

Nach einer ersten Weiterbildung der erfindungsgemäßen Vorrichtung ist vorgesehen, daß sie wenigstens eine Sammeleinrichtung für unmittelbar unterhalb der Oberfläche der Flüssigkeitsansammlung angeordnete Flüssigkeit aufweist. Bei dieser Vorrichtung ist es nicht erforderlich, von außen separate Flüssigkeit zuzuführen. Durch die vorgesehene wenigstens eine Flüssigkeitssammeleinrichtung kann in der Flüssigkeitsansammlung vorhandene, oberflächennahe Flüssigkeit gesammelt werden und mit dem rohrförmigen Leitungsabschnitt zu dem mittels Freistrahl in tiefere Schichten der Flüssigkeitsansammlung geförderten Flüssigkeitsvolumen zusammengeführt werden. Dadurch sind die Kosten für die erfindungsgemäße Vorrichtung wesentlich reduziert, denn eine Flüssigkeitssammeleinrichtung für die oberflächennahe Flüssigkeit kann in konstruktiv einfacher und dadurch kostengünstiger Weise realisiert sein.

So sieht beispielsweise eine Weiterbildung der Erfindung vor, daß die Sammeleinrichtung wenigstens ein trichterartiges Gehäuse umfaßt, dessen größere Eintrittsöffnung unmittelbar unterhalb der Flüssigkeitsansammlungsoberfläche angeordnet ist. Das trichterartige Gehäuse ist somit derart unmittelbar unterhalb der Oberfläche der Flüssigkeitsansammlung angeordnet, daß seine größere Trichteröffnung nahe der Oberfläche der Flüssigkeitsansammlung angeordnet ist. Oberflächennahe Flüssigkeit kann dadurch über die Kante der oberen Eintrittsöffnung in das trichterartige Gehäuse einfließen und wird innerhalb dieses zu dem Volumen zusammengeführt, das in tiefere Schichten der Flüssigkeitsansammlung befördert wird.

Zur einfachen Anordnung des trichterartigen Gehäuses in der Flüssigkeitsansammlung kann beispielsweise ein Schwimmfloß vorgesehen sein, an dem das Gehäuse befestigt ist. Das trichterartige Gehäuse ist dadurch an steigende bzw. fallende Flüssigkeitsstände angepaßt. Eine Anordnung kann auch auf andere Weise durchgeführt sein, beispielsweise an Spundwänden in Ufernähe oder an auf dem Boden der Flüssigkeitsansammlung verankerten Befestigungselementen.

Der rohrförmige Leitungsabschnitt für das Flüssigkeitsvolumen kann dabei durch eine der kleineren Austrittsöffnung des trichterartigen Gehäuses zugeordnete rohrförmige Gehäusefortsetzung ausgebildet sein. Die Flüssigkeitssammeleinrichtung und der rohrförmige Leitungsabschnitt bilden dadurch vorteilhaft ein kompaktes Bauteil aus, dessen Herstellung geringe Kosten erfordert. Dieses kompakte Bauteil kann eine derartige Höhe aufweisen, die gewährleistet, daß das freie Ende der rohrförmigen Gehäusefortsetzung einen großen Abstand zum Boden der Flüssigkeitsansammlung aufweist, so daß der erfindungsgemäß vorgesehene Freistrahls ausgebildet werden kann.

Die Gehäusefortsetzung weist beispielsweise einen kreisrunden Querschnitt mit einer über ihre Längserstreckung etwa konstanten Weite auf. Andere Querschnitte sind selbstverständlich möglich. Die Gehäusefortsetzung kann dabei zumindestens abschnittsweise aus einem Folienmaterial gefertigt sein, da sie keinem großen Druck standzuhalten hat und die Fertigungskosten dadurch weiter reduziert sind.

Als Flüssigkeitsbewegungsmittel ist nach einer Weiterbildung der Erfindung wenigstens ein Propeller vorgesehen, dem ein Antriebsorgan zugeordnet ist. Durch einen Propreller kann ein Impuls auf eine Flüssigkeit übertragen werden, auf welche der Propeller einwirkt. Die Flüssigkeit wird dabei in eine Strömung versetzt, so daß ein Propeller für den hier vorgesehenen Anwendungsfall einer langsamen Flüssigkeitsströmung gut geeignet ist.

Als Antriebsorgan für den Propeller ist vorzugsweise ein oberhalb der Flüssigkeitsansammlungsoberfläche angeordneter Windrotor vorgesehen. Die von dem Windrotor erzeugte Bewegungsenergie wird beispielsweise über ein Getriebe auf den Propeller übertragen. Die dabei vom Windrotor aufgenommene Energiemenge reicht zur Inbewegungsetzung des Propellers aus, denn für die Inströmungsetzung einer Flüssigkeit durch den Propeller wird keine hohe Energie benötigt. Die Energie für den Betrieb des Propellers ist gering, sie beträgt je nach Anwendungsfall beispielsweise einige 100 W oder einige kW.

Für den Propeller kann als Antriebsorgan auch ein Elektromotor mit entsprechend geringer Leistungsaufnahme vorgesehen sein. Diesem Elektromotor ist beispielsweise ein Photovoltanikelement zugeordnet, das die für den Betrieb des Elektromotors erforderliche elektrische Energie erzeugt.

Durch das Verwenden eines Windrotors und/oder eines Photovoltanikelementes für das Erzeugen der Energie für das Flüssigkeitsbewegungsmittel ist vorteilhaft erreicht, daß die Zuführung beispielsweise elektrischer Energie über ein Kabel von außen nicht erforderlich ist. Insgesamt ist ein vorteilhafter energiesparender Betrieb der Vorrichtung ermöglicht.

Der Propeller ist vorzugsweise im rohrförmigen Leitungsabschnitt angeordnet, da aufgrund dieser Anordnung optimal eine Kraft von dem Propeller auf die Flüssigkeit übertragbar ist, in welcher er somit angeordnet ist.

Ausführungsbeispiele der erfindungsgemäßen Vorrichtung, aus denen sich weitere erfinderische Merkmale ergeben, sind in der Zeichnung dargestellt. Die beiden Figuren der Zeichnung zeigen jeweils eine in einem See angeordnete Vorrichtung zum Einbringen von Sauerstoff in die tieferen Bereiche des Sees.

In beiden Figuren ist jeweils ein See mit einer Seeoberfläche 1 und einem Seegrund 2 dargestellt.

Unmittelbar unterhalb der Seeoberfläche 1 ist jeweils ein etwa trichterförmiges, in einem schematischen Schnitt dargestelltes Gehäuse 3 mit einer oberen Trichteröffnung 4 und einer unteren Trichteröffnung 5 angeordnet. Die obere Trichteröffnung 4 ist unmittelbar, beispielsweise 30 cm, unterhalb der Seeoberfläche 1 angeordnet. Der Abstand zwischen der unteren Trichteröffnung 5 und dem Seegrund 2 ist relativ groß ausgebildet.

Das Gehäuse 3 weist im Bereich seiner unteren Trichteröffnung 5 eine rohrförmige Gehäusefortsetzung 6 auf. Durch diese Gehäusefortsetzung 6 wird ein rohrförmiger Leitungsabschnitt ausgebildet, der beispielsweise einen kreisförmigen Querschnitt hat. Die Wände dieser Gehäusefortsetzung 6 können aus einer Folie ausgebildet sein.

Innerhalb des Gehäuses 3 ist im Bereich der Gehäusefortsetzung 6 ein auf einer Welle 7 befestigter Propeller 8 angeordnet. Der Propeller 8 bildet ein Flüssigkeitsbewegungsmittel aus, mit dem Flüssigkeit durch die Gehäusefortsetzung 6 bewegt werden kann. Um den Propeller 8 dafür in eine erforderliche Drehung zu versetzen, steht die Welle 7 mit einem Antriebsorgan 9 in Wirkverbindung.

Wird der Propeller 8 mit dem Antriebsorgan 9 in eine Drehbewegung gesetzt, entsteht in dem Bereich innerhalb des Gehäuses 3 oberhalb des Antriebsorgans 9 eine Sogwirkung. Diese bewirkt, daß von außen Wasser in das Innere des Gehäuses 3 nachgeführt wird. Dieses Nachführen ist durch Pfeile 10 verdeutlicht. Aufgrund der Anordnung der oberen Trichteröffnung 4 unmittelbar unterhalb der Seeoberfläche 1 ist erreicht, daß oberflächennahes und damit sauerstoffreiches und gegebenenfalls erwärmtes Wasser in das Gehäuse 3 nachgeführt wird.

Unterhalb des Propellers 8 ist das dort befindliche Wasser mit einem durch den Propeller 8 erzeugten Impuls beaufschlagt. Das Wasser wird dadurch aus dem Gehäuse 3 herausbewegt. Aufgrund der Anordnung des Endes des Gehäuses 3, nämlich der Gehäusefortsetzung 6, in einem großen Abstand zum Seeboden 2 tritt das Wasser aus dem Gehäuse 3 frei aus. Durch den auf das Wasser übertragende Impuls wird das beschleunigte Volumen in Form eines Freistrahls 11 durch die Flüssigkeit innerhalb der Flüssigkeitsansammlung bewegt. Der Freistrahl 11 wird innerhalb seiner Grenzen 12, 13 in Richtung des Seebodens 2 bewegt. Durch die Grenzen 12, 13 hindurch kann aus der Umgebung Flüssigkeit in den Freistrahl 11 eingemischt werden, wobei diese Flüssigkeit mitgerissen und gleichfalls in Richtung des Seebodens 2 transportiert wird. Bei einem Auftreffen des in dem Freistrahl 11 geführten Volumens auf dem Seeboden 2 wird das Flüssigkeitsvolumen über den Seeboden 2 verteilt, wie durch das Auseinanderlaufen der die Grenzen 12, 13 darstellenden Linien dargestellt.

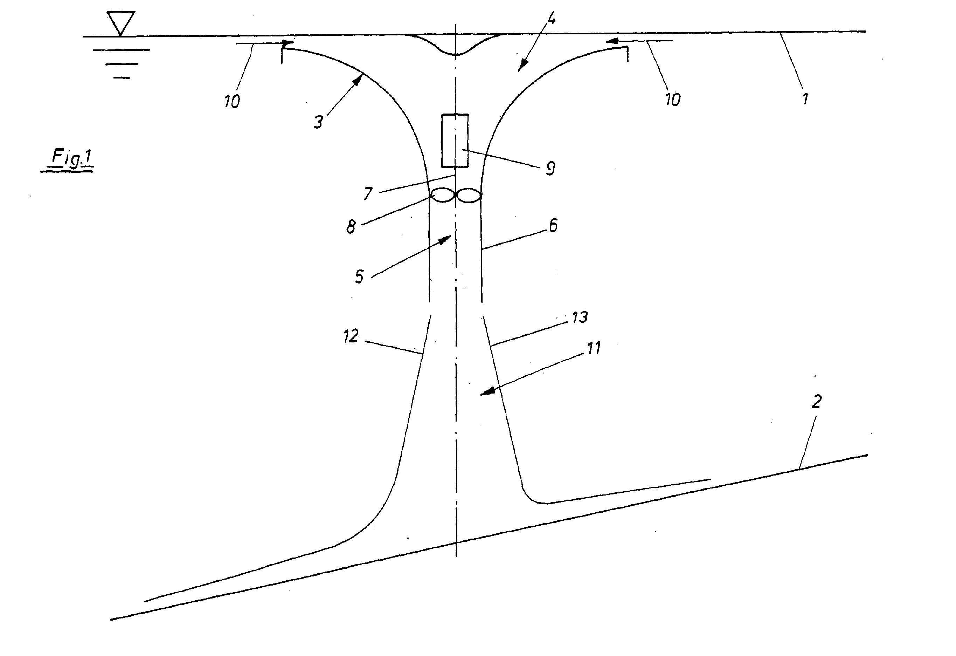

Bei dem Ausführungsbeispiel nach Fig. 1 erfolgt ein relativ gleichmäßiges Verteilen des Volumens über den Seeboden 2, da der Freistrahl 11 etwa vertikal in Richtung des Seebodens 2 bewegt wird.

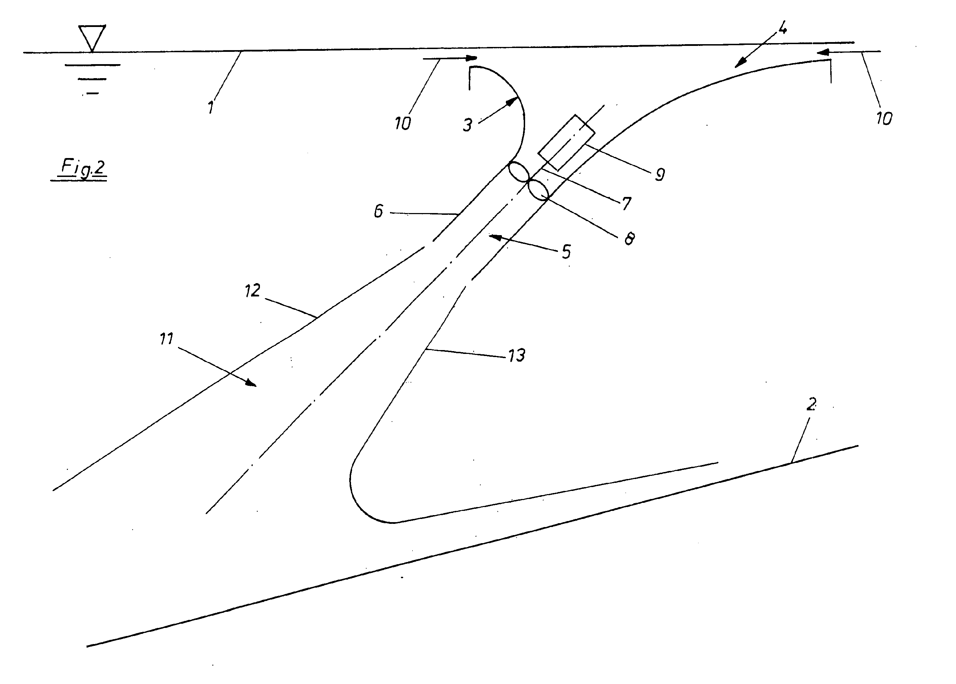

Bei dem Ausführungsbeispiel nach Fig. 2 wird der Freistrahl 11 abweichend in einem spitzen Winkel zur Seeoberfläche 1 bewegt. Daraus resultiert einerseits ein längerer Weg des im Freistrahl 11 geführten Volumens durch die Flüssigkeit und andererseits erfolgt eine ungleichmäßige Verteilung des im Freistrahl 11 geführten Volumens über den Seeboden 2. Ein größerer Anteil des geführten Volumens wird auf der dem Gehäuse 3 abgewandten Seite der Mittelachse des Freistrahls 11 über den Seeboden 2 verteilt.

Das im Freistrahl 11 zugeführte Wasser unterwandert das in den tieferen Bereichen der Flüssigkeitsansammlung angeordnete Wasser.

## Patentansprüche

1. Verfahren zum Einbringen von Gas, insbesondere von Sauerstoff, in tiefere Bereiche einer Flüssigkeitsansammlung, insbesondere eines Sees oder eines Güllelagers, bei dem gasreiche Flüssigkeit in die tieferen Bereiche der Flüssigkeitsansammlung geführt wird,
**dadurch gekennzeichnet,**
**daß** gasreiche Flüssigkeit zu einem Volumen zusammengeführt wird und daß dieses Volumen in Form eines Freistrahls (11) in die tieferen Bereiche der Flüssigkeitsansammlung bewegt wird.

2. Verfahren nach Anspruch 1, **dadurch gekennzeichnet, daß** unmittelbar unterhalb der Flüssigkeitsansammlungsoberfläche (1) angeordnete Flüssigkeit zu dem Volumen zusammengeführt wird.

3. Verfahren nach Anspruch 2, **dadurch gekennzeichnet, daß** in einem Bereich von 0 bis 50 cm unterhalb der Flüssigkeitsansammlungsoberfläche (1) angeordnete Flüssigkeit zu dem Volumen zusammengeführt wird.

4. Verfahren nach einem der Ansprüche 1 bis 3, **dadurch gekennzeichnet, daß** die Bewegung des Volumens in Form des Freistrahls (11) in die tieferen Bereiche über einen langen Zeitraum durchgeführt wird.

5. Verfahren nach einem der Ansprüche 1 bis 4, **dadurch gekennzeichnet, daß** die Bewegung des Volumens in Form des Freistrahls (11) mit einer Geschwindigkeit von etwa 20 cm/s bis 1 m/s durchgeführt wird.

6. Verfahren nach einem der vorhergehenden Ansprüche, **dadurch gekennzeichnet, daß** die Bewegung des Volumens in Form des Freistrahls (11) in einem spitzen Winkel zur Oberfläche (1) der Flüssigkeitsansammlung durchgeführt wird.

7. Verfahren nach Anspruch 6, **dadurch gekennzeichnet, daß** ein spitzer Winkel von etwa 20° vorgesehen wird.

8. Verfahren nach Anspruch 6 oder 7, **dadurch gekennzeichnet, daß** das Volumen in Form des Freistrahls (11) schräg abwärts entgegengesetzt einer Hauptwindrichtung in der räumlichen Umgebung der Flüssigkeitsansammlung bewegt wird.

9. Verfahren nach einem der Ansprüche 2 bis 8, **dadurch gekennzeichnet, daß** die oberflächennahe Flüssigkeit vor dem Zusammenführen zum Volumen aufgerührt wird.

10. Vorrichtung zum Einbringen eines Gases, insbesondere von Sauerstoff, in tiefere Bereiche einer Flüssigkeitsansammlung, insbesondere eines Sees oder eines Güllelagers, insbesondere zur Durchführung des Verfahrens nach einem der Ansprüche 1 bis 9,
**dadurch gekennzeichnet,**
**daß** sie wenigstens einen im Bereich der Oberfläche (1) der Flüssigkeitsansammlung unterhalb der Oberfläche (1) endenden rohrförmigen Leitungsabschnitt für ein Flüssigkeitsvolumen aufweist und daß dem rohrförmigen Leitungsabschnitt zumindestens ein Flüssigkeitsbewegungsmittel zugeordnet ist.

11. Vorrichtung nach Anspruch 10, **dadurch gekennzeichnet, daß** sie wenigstens eine Sammeleinrichtung für unmittelbar unterhalb der Oberfläche (1) der Flüssigkeitsansammlung angeordnete Flüssigkeit aufweist.

12. Vorrichtung nach Anspruch 11, **dadurch gekennzeichnet, daß** die Sammeleinrichtung wenigstens ein trichterartiges Gehäuse (3) umfaßt, dessen größere Eintrittsöffnung (4) unmittelbar unterhalb der Flüssigkeitsansammlungsoberfläche (1) angeordnet ist.

13. Vorrichtung nach Anspruch 12, **dadurch gekennzeichnet, daß** das trichterartige Gehäuse (3) an einem Schwimmfloß gehalten ist.

14. Vorrichtung nach Anspruch 12 oder 13, **dadurch gekennzeichnet, daß** die Gehäusewände eine im Längsschnitt des Gehäuses (3) nach innen gewölbte Ausbildung aufweisen.

15. Vorrichtung nach einem der Ansprüche 12 bis 14, **dadurch gekennzeichnet, daß** der rohrförmige Leitungsabschnitt für das Flüssigkeitsvolumen durch eine der kleineren Austrittsöffnung (5) des trichterartigen Gehäuses (3) zugeordnete rohrförmige Gehäusefortsetzung (6) ausgebildet ist.

16. Vorrichtung nach Anspruch 15, **dadurch gekennzeichnet, daß** die Gehäusefortsetzung (6) einen kreisrunden Querschnitt mit einer über ihre Längserstreckung etwa konstanten Weite aufweist.

17. Vorrichtung nach Anspruch 16, **dadurch gekennzeichnet, daß** die Gehäusefortsetzung (6) zumindestens abschnittsweise aus einem Folienmaterial gefertigt ist.

18. Vorrichtung nach einem der Ansprüche 10 bis 17, **dadurch gekennzeichnet, daß** das Flüssigkeitsbewegungsmittel wenigstens einen Propeller (8) umfaßt, dem ein Antriebsorgan (9) zugeordnet ist.

19. Vorrichtung nach Anspruch 18, **dadurch gekennzeichnet, daß** das Antriebsorgan für den Propeller (8) ein oberhalb der Flüssigkeitsansammlungsoberfläche angeordneter Windrotor ist.

20. Vorrichtung nach Anspruch 18, **dadurch gekennzeichnet, daß** das Antriebsorgan (9) für den Propeller (8) ein Elektromotor mit geringer Leistungsaufnahme ist.

21. Vorrichtung nach Anspruch 20, **dadurch gekennzeichnet, daß** dem Elektromotor zumindestens ein Photovoltanikelement zugeordnet ist.

22. Vorrichtung nach einem der Ansprüche 18 bis 21, **dadurch gekennzeichnet, daß** der Propeller (8) im rohrförmigen Leitungsabschnitt angeordnet ist.
